(19) 

Europäisches Patentamt

European Patent Office

Office européen des brevets

(11) **EP 4 316 650 A1**

(12) **EUROPEAN PATENT APPLICATION**
published in accordance with Art. 153(4) EPC

(43) Date of publication:
**07.02.2024 Bulletin 2024/06**

(21) Application number: **22779386.6**

(22) Date of filing: **17.01.2022**

(51) International Patent Classification (IPC):
**B01J 23/63** [(2006.01)]     **B01D 53/94** [(2006.01)]
**B01J 35/04** [(2006.01)]     **F01N 3/10** [(2006.01)]
**F01N 3/28** [(2006.01)]

(52) Cooperative Patent Classification (CPC):
**B01D 53/94; B01J 23/63; B01J 35/56; F01N 3/10;
F01N 3/28**

(86) International application number:
**PCT/JP2022/001429**

(87) International publication number:
**WO 2022/209154 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021062016**

(71) Applicant: **Mitsui Mining & Smelting Co., Ltd.
Shinagawa-ku
Tokyo 141-8584 (JP)**

(72) Inventors:
• **TANAKA, Hiroki**
  **Ageo-shi, Saitama 362-0025 (JP)**
• **MORITA, Itaru**
  **Ageo-shi, Saitama 362-0025 (JP)**
• **NAGAO, Yuki**
  **Ageo-shi, Saitama 362-0025 (JP)**

(74) Representative: **Novagraaf Technologies
Bâtiment O2
2, rue Sarah Bernhardt
CS90017
92665 Asnières-sur-Seine Cedex (FR)**

(54) **EXHAUST GAS PURIFYING CATALYST AND EXHAUST GAS PURIFICATION SYSTEM**

(57)   An object of the present invention is to provide an exhaust gas purification catalyst with improved exhaust gas purification performance, and in order to achieve such an object, the present invention provides an exhaust gas purification catalyst (1A) including a substrate (10) and a catalyst layer (20A) provided on the substrate (10),
wherein a content of aluminum element in terms of oxide and a content of barium element in a first layer (21) of the catalyst layer (20A) are 15% by mass or more and 3% by mass or more, respectively, based on a mass of the first layer (21), and
wherein a total of a content of zirconium element in terms of oxide and a content of a rare earth element in terms of oxide, a content of aluminum element in terms of oxide, and a content of barium element in a second layer (22) of the catalyst layer (20A) are 80% by mass or more, less than 15% by mass, and less than 3% by mass, respectively, based on a mass of the second layer (22).

[FIG. 4]

EP 4 316 650 A1

**Description**

**FIELD OF THE INVENTION**

The present invention relates to an exhaust gas purification catalyst and an exhaust gas purification system.

**BACKGROUND ART**

Exhaust gas emitted from an internal combustion engine of an automobile, a motorcycle or the like contains harmful components, such as hydrocarbons (HC), carbon monoxide (CO) and nitrogen oxide (NOx). As an exhaust gas purification catalyst that purifies and detoxifies these harmful components, a three-way catalyst having a catalytic activity to oxidize HC and convert it to water and carbon dioxide, to oxidize CO and convert it to carbon dioxide as well as to reduce NOx and convert it to nitrogen, has been used.

In an exhaust gas purification catalyst such as a three-way catalyst, alumina, a complex oxide containing zirconium element (Zr) and a rare earth element (Ln) (hereafter referred to as "Zr-Ln-based complex oxide"), and the like are used as a support for supporting a catalytically-active component containing a platinum group element such as platinum element (Pt), palladium element (Pd), or rhodium element (Rh), and barium element (Ba) is used as a co-catalyst. For example, a complex oxide containing zirconium element (Zr) and cerium element (Ce) (hereinafter referred to as "Zr-Ce-based complex oxide") is used as a Zr-Ln-based complex oxide. A Zr-Ce-based complex oxide has an oxygen storage capacity (OSC), and is advantageous in mitigating fluctuations in the oxygen concentration in the exhaust gas and thus expanding the operating window of the catalyst.

Patent Document 1 discloses an exhaust gas purification catalyst including a substrate and a catalyst layer provided on the substrate. The catalyst layer in Patent Document 1 includes a lower layer containing Pt or Pd, a Zr-Ce-based complex oxide, alumina, and barium sulfate, and an upper layer containing Rh or Pt, a Zr-Ce-based complex oxide, and alumina. The contents of the Zr-Ce-based complex oxide, alumina, and Ba in the lower layer are about 58% by mass, about 29% by mass, and about 7% by mass, respectively, based on the mass of the lower layer, and the contents of the Zr-Ce-based complex oxide and alumina in the upper layer are about 49% by mass and about 49% by mass, respectively, based on the mass of the upper layer.

**CITATION LIST**

PATENT DOCUMENT

Patent Document 1: JP 2008-12410 A

**SUMMARY OF THE INVENTION**

There is a demand for further improvement in exhaust gas purification performance of an exhaust gas purification catalyst.

Accordingly, an object of the present invention is to provide an exhaust gas purification catalyst with improved exhaust gas purification performance and an exhaust gas purification system including the exhaust gas purification catalyst.

The present inventors have found that in a catalyst layer including a first layer containing a first platinum group element and a second layer containing a second platinum group element, the exhaust gas purification performance of the exhaust gas purification catalyst is improved by adjusting the content of aluminum element in terms of oxide and the content of barium element in the first layer to a predetermined value or more, adjusting the content of aluminum element in terms of oxide and the content of barium element in the second layer to less than a predetermined value, and adjusting the total of the content of zirconium element in terms of oxide and the content of a rare earth element in terms of oxide in the second layer to a predetermined value or more.

The present invention has been completed based on the above findings, and includes the following inventions.

[1] An exhaust gas purification catalyst including:

a substrate; and
a catalyst layer provided on the substrate,
wherein the catalyst layer includes
a first layer containing: a first platinum group element; an oxide containing aluminum element; and barium element; and

a second layer containing: a second platinum group element; and a complex oxide containing zirconium element and a rare earth element,

wherein, in the first layer, a content of aluminum element in terms of oxide and a content of barium element are 15% by mass or more and 3% by mass or more, respectively, based on a mass of the first layer, and

wherein, in the second layer, a total of a content of zirconium element in terms of oxide and a content of a rare earth element in terms of oxide, a content of aluminum element in terms of oxide, and a content of barium element are 80% by mass or more, less than 15% by mass, and less than 3% by mass, respectively, based on a mass of the second layer.

[2] An exhaust gas purification system configured to purify exhaust gas emitted from an internal combustion engine,

wherein the exhaust gas purification system includes:

an exhaust gas path through which exhaust gas flows;
a first exhaust gas purification catalyst provided on an upstream side in the exhaust gas path; and
a second exhaust gas purification catalyst provided on a downstream side in the exhaust gas path, and

wherein the second exhaust gas purification catalyst is the exhaust gas purification catalyst according to [1].

According to the present invention, there is provided an exhaust gas purification catalyst having improved exhaust gas purification performance, particularly exhaust gas purification performance after being exposed to a high-temperature environment, and an exhaust gas purification system including the exhaust gas purification catalyst.

**BRIEF DESCRIPTION OF THE DRAWINGS**

Figure 1 is a partial end view showing a state in which an exhaust gas purification catalyst according to a first embodiment of the present invention is disposed in an exhaust gas path of an internal combustion engine;
Figure 2 is an end view taken along line A-A of Figure 1;
Figure 3 is an enlarged view of a region R in Figure 2;
Figure 4 is an end view taken along line B-B of Figure 1;
Figure 5 is an end view (end view corresponding to Figure 4) of an exhaust gas purification catalyst according to a second embodiment of the present invention;
Figure 6 is an end view (end view corresponding to Figure 4) of an exhaust gas purification catalyst according to a third embodiment of the present invention;
Figure 7 is an end view (end view corresponding to Figure 4) of an exhaust gas purification catalyst according to a fourth embodiment of the present invention; and
Figure 8 is a plan view of an exhaust gas purification system according to one embodiment of the present invention.

**DETAILED DESCRIPTION OF THE INVENTION**

**<<Description of terms>>**

The terms used herein will be described below.

**<BET specific surface area>**

The BET specific surface area is measured according to JIS R1626, "Measuring methods for the specific surface area of fine ceramic powders by gas adsorption using the BET method," "6.2 Flow method," "(3.5) Single-point method." In this method, a nitrogen-helium gas mixture containing 30% by volume of nitrogen as an adsorption gas and 70% by volume of helium as a carrier gas is used as a gas. "BELSORP-MR6" manufactured by MicrotracBEL Corp. is used as a measurement device.

**<Group of Platinum group elements>**

The group of platinum group elements means an element group consisting of platinum element (Pt), palladium element (Pd), rhodium element (Rh), ruthenium element (Ru), osmium element (Os), and iridium element (Ir).

**<Rare earth element>**

Examples of a rare earth element (Ln) include Cerium element (Ce), yttrium element (Y), praseodymium element (Pr), scandium element (Sc), lanthanum element (La), neodymium element (Nd), samarium element (Sm), europium element (Eu), gadolinium element (Gd), terbium element (Tb), dysprosium element (Dy), holmium element (Ho), erbium element (Er), thulium element (Tm), ytterbium element (Yb), lutetium element (Lu) and the like.

**<Oxide>**

The oxide of aluminum element (Al) means $Al_2O_3$, the oxide of silicon element (Si) means $SiO_2$, the oxide of zirconium element (Zr) means $ZrO_2$, the oxide of chromium element (Cr) means $Cr_2O_3$, the oxide of boron (B) means $B_2O_3$, the oxide of magnesium element (Mg) means MgO, the oxide of calcium element (Ca) means CaO, the oxide of strontium element (Sr) means SrO, the oxide of barium element (Ba) means BaO. The oxide of rare earth element (Ln) means a sesquioxide ($Ln_2O_3$) except the oxide of Ce, the oxide of Pr, and the oxide of Tb, where the oxide of Ce means $CeO_2$, the oxide of Pr means PreOn, and the oxide of Tb means $Tb_4O_7$.

**<Oxide containing aluminum element (Al-based oxide)>**

An Al-based oxide is used as a support for a catalytically-active component. An Al-based oxide is distinct from alumina used as a binder ("alumina binder"). An Al-based oxide is, for example, particulate. From the viewpoint of improving the supportability for a catalytically-active component, an Al-based oxide is preferably porous. The BET specific surface area of an Al-based oxide is preferably 50 $m^2$/g or more and 250 $m^2$/g or less, more preferably 80 $m^2$/g or more and 200 $m^2$/g or less.

An Al-based oxide may or may not contain an element other than Al and O.

An Al-based oxide according to one embodiment (hereinafter referred to as "first Al-based oxide") does not contain an element other than Al and O. That is, the first Al-based oxide is alumina.

An Al-based oxide according to another embodiment (hereinafter referred to as "second Al-based oxide") contains one or more types of elements other than Al and O. Examples of the second Al-based oxide include an oxide obtained by modifying the surface of alumina with an element other than Al and O and an oxide obtained by dissolving an element other than Al and O in alumina.

An element other than Al and O may be a non-metal element or a metal element. Examples of such a non-metal element include B and Si, and examples of such a metal element include Zr, Cr, Ln (e.g., Ce, La, and Nd), Mg, Ca, Sr, and Ba. From the viewpoint of improving the heat resistance of the second Al-based oxide, an element other than Al and O is preferably selected from La, Ce, Sr, and Ba.

Examples of the second Al-based oxide include alumina-silica, alumina-silicate, alumina-zirconia, alumina-chromia, alumina-ceria, and alumina-lanthana.

In the second Al-based oxide, an element other than Al and O may form a solid solution phase with Al and O, may form a single phase (for example, an oxide phase of an element other than Al and O) which is a crystalline phase or an amorphous phase, or may form both a solid solution phase and a single phase.

In the second Al-based oxide, the content of Al in terms of oxide is preferably 80% by mass or more and 99.9% by mass or less, more preferably 90% by mass or more and 99.8% by mass or less, and still more preferably 95% by mass or more and 99.5% by mass or less, based on the mass of the second Al-based oxide, from the viewpoint of improving the heat resistance.

In the second Al-based oxide, the content of an element other than Al and O in terms of oxide is preferably 0.1% by mass or more and 20% by mass or less, more preferably 0.2% by mass or more and 10% by mass or less, and still more preferably 0.5% by mass or more and 5% by mass or less, based on the mass of the second Al-based oxide, from the viewpoint of improving the heat resistance. "The content of an element other than Al and O in terms of oxide" means, in a case where the second Al-based oxide contains two or more types of elements other than Al and O, the total content of the two or more types of elements in terms of oxide.

**<Complex oxide containing zirconium element and rare earth element (Zr-Ln-based complex oxide)>**

A Zr-Ln-based complex oxide is used as a support for a catalytically-active component. A Zr-Ln-based complex oxide is, for example, particulate. From the viewpoint of improving the supportability for a catalytically-active component, a Zr-Ln-based complex oxide is preferably porous. The BET specific surface area of a Zr-Ln-based complex oxide is preferably 20 $m^2$/g or more and 120 $m^2$/g or less, more preferably 30 $m^2$/g or more and 80 $m^2$/g or less.

A Zr-Ln-based complex oxide according to one embodiment (hereinafter referred to as "first Zr-Ln-based complex oxide") contains Zr and Ce. Zr mainly contributes to the improvement of the heat resistance of Zr-Ln-based complex oxide, and Ce mainly contributes to the improvement of the oxygen storage capacity of Zr-Ln-based complex oxide. In the first Zr-Ln-based complex oxide, the total of the content of Zr in terms of oxide and the content of Ce in terms of oxide is preferably 60% by mass or more, more preferably 70% by mass or more, and still more preferably 80% by mass or more, based on the mass of the first Zr-Ln-based complex oxide, from the viewpoint of improving the heat resistance and the oxygen storage capacity. The upper limit is 100% by mass.

In the first Zr-Ln-based complex oxide, Zr may form a solid solution phase with Ce and O, may form a single phase (for example, a single phase of $ZrO_2$) which is a crystalline phase or an amorphous phase, or may form both a solid solution phase and a single phase, but it is preferable that at least part of Zr forms a solid solution phase.

In the first Zr-Ln-based complex oxide, the content of Zr in terms of oxide is preferably 20% by mass or more and 95% by mass or less, more preferably 30% by mass or more and 85% by mass or less, and still more preferably 40% by mass or more and 75% by mass or less, based on the mass of the first Zr-Ln-based complex oxide, from the viewpoint of improving the heat resistance.

In the first Zr-Ln-based complex oxide, Ce may form a solid solution phase with Zr and O, may form a single phase (for example, a single phase of $CeO_2$) which is a crystalline phase or an amorphous phase, or may form both a solid solution phase and a single phase, but it is preferable that at least part of Ce forms a solid solution phase.

In the first Zr-Ln-based complex oxide, the content of Ce in terms of oxide is preferably 5% by mass or more and 80% by mass or less, more preferably 10% by mass or more and 60% by mass or less, and still more preferably 15% by mass or more and 50% by mass or less, based on the mass of the first Zr-Ln-based complex oxide, from the viewpoint of improving the oxygen storage capacity and the heat resistance.

In the first Zr-Ln-based complex oxide, the mass ratio of the amount of Ce in terms of oxide to the total of the amount of Zr in terms of oxide and the amount of Ce in terms of oxide is preferably 0.001 or more and 0.9 or less, more preferably 0.05 or more and 0.7 or less, and still more preferably 0.1 or more and 0.6 or less, from the viewpoint of balancing the oxygen storage capacity and heat resistance.

The first Zr-Ln-based complex oxide may contain one or more types of Ln other than Ce, or may not contain Ln other than Ce.

In the first Zr-Ln-based complex oxide, Ln other than Ce is preferably selected from La, Nd, Pr, Y, Gd, and Sm, and more preferably selected from La, Nd, Pr, and Y, from the viewpoint of improving the heat resistance.

In a case where the first Zr-Ln-based complex oxide contains Ln other than Ce, Ln other than Ce may form a solid solution phase with Zr and/or Ce and O, may form a single phase (for example, an oxide single phase of Ln other than Ce) which is a crystalline phase or an amorphous phase, or may form both a solid solution phase and a single phase, but it is preferable that at least part of Ln other than Ce forms a solid solution phase.

In a case where the first Zr-Ln-based complex oxide contains Ln other than Ce, the content of Ln other than Ce in terms of oxide in the first Zr-Ln-based complex oxide is preferably 1% by mass or more and 40% by mass or less, more preferably 3% by mass or more and 30% by mass or less, and still more preferably 5% by mass or more and 20% by mass or less, based on the mass of the first Zr-Ln-based complex oxide, from the viewpoint of improving the heat resistance. "The content of Ln other than Ce in terms of oxide" means, in a case where the first Zr-Ln-based complex oxide contains two or more types of Ln other than Ce, the total content of the two or more types of Ln in terms of oxide.

A Zr-Ln-based complex oxide according to another embodiment (hereinafter referred to as a "second Zr-Ln-based complex oxide") contains Zr and one or more types of Ln other than Ce and does not contain Ce.

In the second Zr-Ln-based complex oxide, Zr may form a solid solution phase with Ln other than Ce and O, may form a single phase (for example, a single phase of $ZrO_2$) which is a crystalline phase or an amorphous phase, or may form both a solid solution phase and a single phase, but it is preferable that at least part of Zr forms a solid solution phase.

In the second Zr-Ln-based complex oxide, the content of Zr in terms of oxide is preferably 60% by mass or more and 99% by mass or less, more preferably 70% by mass or more and 99% by mass or less, and still more preferably 80% by mass or more and 95% by mass or less, based on the mass of the second Zr-Ln-based complex oxide, from the viewpoint of improving the heat resistance.

In the second Zr-Ln-based complex oxide, Ln other than Ce is preferably selected from Y, La, Nd, and Pr, and more preferably selected from Y, La, and Nd, from the viewpoint of improving the heat resistance.

In the second Zr-Ln-based complex oxide, Ln other than Ce may form a solid solution phase with Zr and O, may form a single phase (for example, an oxide single phase of Ln other than Ce) which is a crystalline phase or an amorphous phase, or may form both a solid solution phase and a single phase, but it is preferable that at least part of Ln other than Ce forms a solid solution phase.

In the second Zr-Ln-based complex oxide, the content of Ln other than Ce in terms of oxide is preferably 1% by mass or more and 30% by mass or less, more preferably 3% by mass or more and 25% by mass or less, and still more preferably 5% by mass or more and 20% by mass or less, based on the mass of the second Zr-Ln-based complex oxide, from the viewpoint of improving the heat resistance. "The content of Ln other than Ce in terms of oxide" means, in a case where the second Zr-Ln-based complex oxide contains two or more types of Ln other than Ce, the total content of the two or more types of Ln in terms of oxide.

The first or second Zr-Ln-based complex oxide may contain one or more types of alkali metal elements. Such an alkaline earth metal element is preferably selected from Ca, Sr, and Ba from the viewpoint of improving the co-catalyst effect for a platinum group element.

In the first or second Zr-Ln-based complex oxide, the content of an alkaline earth metal element in terms of oxide is preferably 0.1% by mass or more and 10% by mass or less, more preferably 0.2% by mass or more and 5% by mass or less, and still more preferably 0.5% by mass or more and 3% by mass or less, based on the mass of the first or second Zr-Ln-based complex oxide, from the viewpoint of improving the co-catalyst effect for a platinum group element. "The content of an alkaline earth metal element in terms of oxide" means, in a case where the first or second Zr-Ln-based complex oxide contains two or more types of alkaline earth metal elements, the total content of the two or more types of alkaline earth metal elements in terms of oxide.

**<Binder>**

Examples of a binder include inorganic binders such as alumina, zirconia, titania, silica, and ceria.

**<Content of aluminum element (Al) in terms of oxide>**

When calculating the content of Al in terms of oxide in a layer, an Al source is not particularly limited as long as the Al source is an oxide containing Al. Examples of such an Al source include an Al-based oxide and an alumina binder.

The content of Al in terms of oxide in a layer means, in a case where the layer contains one type of Al source, the content of Al in terms of oxide derived from the one type of Al source, and means, in a case where the layer contains two or more types of Al sources, the total content of Al in terms of oxide derived from the two or more types of Al sources.

The content of Al in terms of oxide in a layer can be measured, for example, using a scanning electron microscope-energy dispersive X-ray spectrometer (SEM-EDX).

**<Content of barium element (Ba)>**

When calculating the content of Ba in a layer, a Ba source is not particularly limited as long as the Ba source contains Ba. Examples of such a Ba source include barium carbonate, barium oxide, barium aluminate, barium zirconate, an Al-based oxide containing Ba, and a Zr-Ln-based complex oxide containing Ba.

The content of Ba in a layer means, in a case where the layer contains one type of Ba source, the content of Ba derived from the one type of Ba source, and means, in a case where the layer contains two or more types of Ba sources, the total content of Ba derived from the two or more types of Ba sources. The content of Ba means the content of Ba in terms of metal.

The content of Ba in a layer can be measured, for example, using a scanning electron microscope-energy dispersive X-ray spectrometer (SEM-EDX).

**<Content of zirconium element (Zr) in terms of oxide>**

When calculating the content of Zr in terms of oxide in a layer, a Zr source is not particularly limited as long as the Zr source is an oxide containing Zr. Examples of such a Zr source include a Zr-Ln-based complex oxide, an Al-based oxide containing Zr, and a zirconia binder.

The content of Zr in terms of oxide in a layer means, in a case where the layer contains one type of Zr source, the content of Zr in terms of oxide derived from the one type of Zr source, and means, in a case where the layer contains two or more types of Zr sources, the total content of Zr in terms of oxide derived from the two or more types of Zr sources.

The content of Zr in terms of oxide in a layer can be measured, for example, using a scanning electron microscope-energy dispersive X-ray spectrometer (SEM-EDX).

**<Content of rare earth element (Ln) in terms of oxide>**

When calculating the content of Ln in terms of oxide in a layer, an Ln source is not particularly limited as long as the Ln source is an oxide containing Ln. Examples of such an Ln source include a Zr-Ln-based complex oxide, an Al-based oxide containing Ln, and a binder containing Ln (for example, ceria binder). An Ln source need not be a different oxide from a Zr source, and may be the same oxide as a Zr source. For example, a Zr-Ln-based complex oxide corresponds to both an Ln source and a Zr source. Further, an Al-based oxide containing Zr and Ln corresponds to both an Ln source and a Zr source.

The content of Ln in terms of oxide in a layer means, in a case where the layer contains one type of Ln source, the content of Ln in terms of oxide derived from the one type of Ln source, and means, in a case where the layer contains two or more types of Ln sources, the total content of Ln in terms of oxide derived from the two or more types of Ln sources.

The content of Ln in terms of oxide in a layer can be measured, for example, using a scanning electron microscope-energy dispersive X-ray spectrometer (SEM-EDX).

**<Content of cerium element (Ce) in terms of oxide>**

When calculating the content of Ce in terms of oxide in a layer, a Ce source is not particularly limited as long as the Ce source is an oxide containing Ce. Examples of such a Ce source include a Zr-Ln-based complex oxide containing Ce, an Al-based oxide containing Ce, and a ceria binder. A Ce source need not be a different oxide from a Zr source, and may be the same oxide as a Zr source. For example, a Zr-Ln-based complex oxide containing Ce corresponds to both a Ce source and a Zr source. Further, an Al-based oxide containing Zr and Ce corresponds to both a Ce source and a Zr source.

The content of Ce in terms of oxide in a layer means, in a case where the layer contains one type of Ce source, the content of Ce in terms of oxide derived from the one type of Ce source, and means, in a case where the layer contains two or more types of Ce sources, the total content of Ce in terms of oxide derived from the two or more types of Ce sources.

The content of Ce in terms of oxide in a layer can be measured, for example, using a scanning electron microscope-energy dispersive X-ray spectrometer (SEM-EDX).

**<Content of rare earth element (Ln) other than cerium element (Ce) in terms of Oxide>**

When calculating the content of Ln other than Ce in terms of oxide in a layer, a source of Ln other than Ce is not particularly limited as long as the source of Ln other than Ce is an oxide containing Ln other than Ce. Examples of such a source of Ln other than Ce include a Zr-Ln-based complex oxide containing Ln other than Ce and an Al-based oxide containing Ln other than Ce. A source of Ln other than Ce need not be a different oxide from a Zr source, and may be the same oxide as a Zr source. For example, a Zr-Ln-based complex oxide containing Ln other than Ce corresponds to both a source of Ln other than Ce and a Zr source. Further, an Al-based oxide containing Zr and Ln other than Ce corresponds to both a source of Ln other than Ce and a Zr source.

The content of Ln other than Ce in terms of oxide in a layer means, in a case where the layer contains one type of source of Ln other than Ce, the content of Ln other than Ce in terms of oxide derived from the one type of source of Ln other than Ce, and means, in a case where the layer contains two or more types of sources of Ln other than Ce, the total content of Ln other than Ce in terms of oxide derived from the two or more types of sources of Ln other than Ce.

The content of Ln other than Ce in a layer can be measured, for example, using a scanning electron microscope-energy dispersive X-ray spectrometer (SEM-EDX).

**<<Exhaust gas purification catalyst>>**

An exhaust gas purification catalyst of the present invention will be described below.

**<First embodiment>**

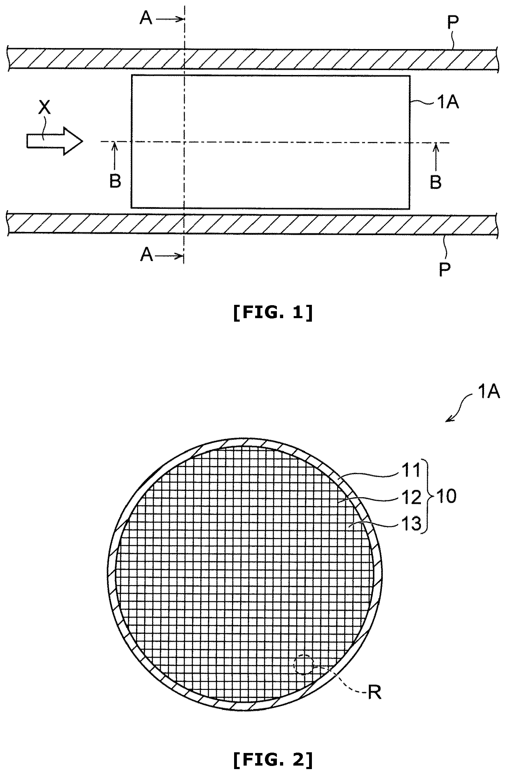

An exhaust gas purification catalyst 1A according to a first embodiment of the present invention will be described below with reference to Figures 1 to 4.

As shown in Figure 1, the exhaust gas purification catalyst 1A is disposed in an exhaust gas path in an exhaust pipe P of an internal combustion engine. The internal combustion engine is, for example, a gasoline engine. The internal combustion engine may be a lean burn engine. Exhaust gas emitted from the internal combustion engine flows through the exhaust gas path in the exhaust pipe P from one end to the other end of the exhaust pipe P, and is purified by the exhaust gas purification catalyst 1A provided in the exhaust pipe P. In each drawing, the exhaust gas flow direction is denoted by the reference sign X. The upstream position in the exhaust gas flow direction X is referred to as the "exhaust gas inflow side," and the downstream position in the exhaust gas flow direction X is referred to as the "exhaust gas outflow side," in some cases.

As shown in Figures 2 to 4, the exhaust gas purification catalyst 1A includes a substrate 10 and a catalyst layer 20A provided on the substrate 10.

The substrate 10 can be made of any material selected as appropriate from materials commonly used for substrates of exhaust gas purification catalysts. The material for forming the substrate 10 is preferably a material that allows the substrate 10 to stably maintain its shape even when the substrate 10 is exposed to an exhaust gas at, for example, 400°C or more. Examples of materials for the substrate 10 include: ceramics such as cordierite, silicon carbide (SiC), and aluminum titanate; and alloys such as stainless steel.

The substrate 10 has, for example, a honeycomb structure.

As shown in Figures 2 to 4, the substrate 10 includes a tubular member 11 that defines the external shape of the substrate 10, a partition wall 12 provided in the tubular member 11, and cells 13 separated from each other by the partition wall 12.

As shown in Figure 2, the tubular member 11 has, for example, a hollow cylindrical shape, but may have another shape such as a hollow elliptic cylindrical shape and a polygonal tubular shape.

As shown in Figures 2 to 4, the partition wall 12 is present between adjacent cells 13, whereby the adjacent cells 13 are separated from each other by the partition wall 12. The partition wall 12 is preferably porous. The thickness of the partition wall 12 is, for example, 20 $\mu$m or more and 1500 $\mu$m or less.

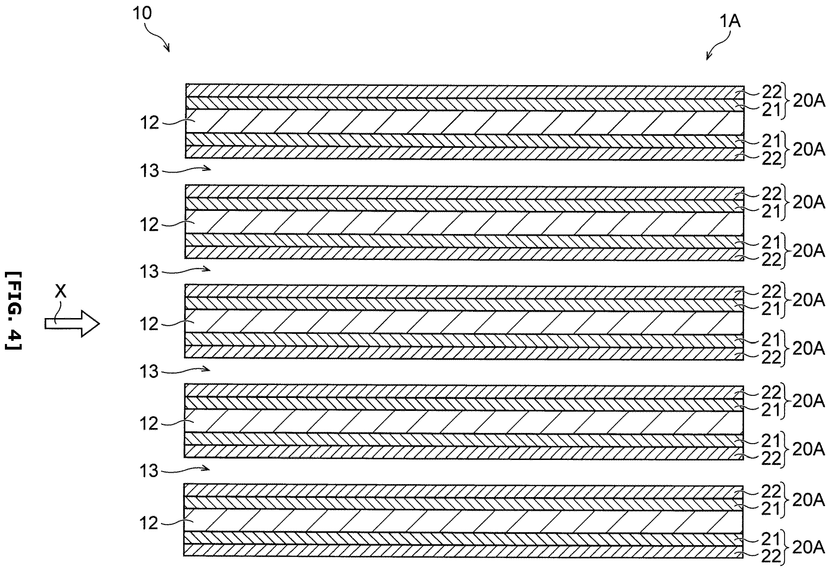

As shown in Figure 4, each cell 13 extends in the exhaust gas flow direction X and has an end on the exhaust gas inflow side and an end on the exhaust gas outflow side.

As shown in Figure 4, the end on the exhaust gas inflow side and the end of the exhaust gas outflow side of each cell 13 are both open. Therefore, the exhaust gas that has flowed in from the end (opening) on the exhaust gas inflow side of each cell 13 flows out from the end (opening) on the exhaust gas outflow side of each cell 13. Such a mode is called a flow-through type.

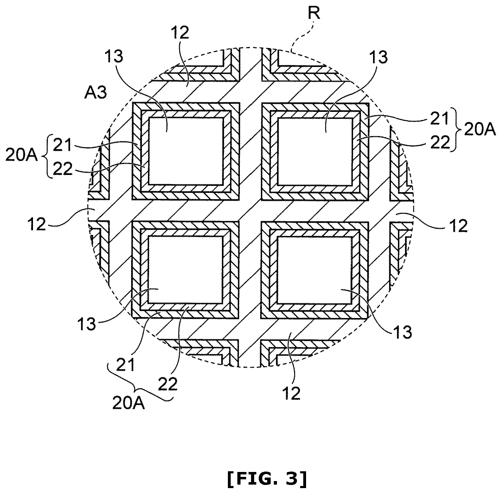

As shown in Figures 2 and 3, the shape in a plan view of the end (opening) on the exhaust gas inflow side of each cell 13 is rectangle, but may be other shapes such as hexagon and octagon. The shape in a plan view of the end (opening) on the exhaust gas outflow side of each cell 13 is also the same.

The cell density per square inch of the substrate 10 is, for example, 200 cells or more and 1000 cells or less. The cell density per square inch of the substrate 10 means the total number of the cells 13 per square inch in a cross-section obtained by cutting the substrate 10 by a plane perpendicular to the exhaust gas flow direction X.

The volume of the substrate 10 is, for example, 0.1 L or more and 20 L or less. The volume of substrate 10 means the apparent volume of substrate 10. In a case where the substrate 10 is in the form of a cylinder, and the outer diameter of the substrate 10 is 2r and the length of the substrate 10 is L, the volume of the substrate 10 is represented by the formula: Volume of substrate 10 = $\pi \times r^2 \times L$.

As shown in Figure 4, the catalyst layer 20A is provided on the partition wall 12 of the substrate 10. The catalyst layer 20A may be provided directly on the partition wall 12, or may be provided on the partition wall 12 via another layer.

As shown in Figure 4, the catalyst layer 20A extends from the end on the exhaust gas inflow side of the partition wall 12 to the end on the exhaust gas outflow side of the partition wall 12 along the exhaust gas flow direction X. The catalyst layer 20A may extend from the end on the exhaust gas inflow side of the partition wall 12 so as not to reach the end on the exhaust gas outflow side of the partition wall 12 along the exhaust gas flow direction X, or may extend from the end on the exhaust gas outflow side of the partition wall 12 along the direction opposite to the exhaust gas flow direction X so as not to reach the end of the exhaust gas inflow side of the partition wall 12.

From the viewpoint of balancing the temperature rise and the purification performance of the catalyst, the mass (mass after drying and calcining) of the catalyst layer 20A per unit volume of the substrate 10 is preferably 50 g/L or more and 500 g/L or less, more preferably 70 g/L or more and 400 g/L or less, and still more preferably 90 g/L or more and 300 g/L or less.

As shown in Figure 4, the catalyst layer 20A includes a first layer 21 and a second layer 22.

**<First layer>**

The first layer 21 will be described below.

The first layer 21 contains a first platinum group element, an oxide containing aluminum element (Al-based oxide), and barium element (Ba).

The first platinum group element contained in the first layer 21 is composed of one or more types of elements selected from the group of platinum group elements.

The first platinum group element is contained in the first layer 21 in a form that can function as a catalytically-active component, for example, in the form of a metal, an alloy, a compound (for example, an oxide), or the like. From the viewpoint of improving exhaust gas purification performance, a catalytically-active component containing the first platinum group element is preferably in the form of a particle.

Ba contained in the first layer 21 acts as a co-catalyst for Pd and improves exhaust gas purification performance. Therefore, the first platinum group element preferably contains Pd. In a case where the first layer 21 contains Pd, the exhaust gas purification performance at a low temperature is particularly improved. This effect is significant in a case where the first layer 21 contains Pd and the second layer 22 contains Rh. In the present specification, "low temperature" usually means 100°C or more and 500°C or less, preferably 150°C or more and 400°C or less.

In a case where the first platinum group element contains Pd, it is preferable that the total content of a platinum group element(s) other than Pd in the first layer 21 on a molar basis is less than the content of Pd on a molar basis from the viewpoint of preventing deactivation of Pd by alloying Pd with the platinum group element(s) other than Pd. In the first layer 21, the ratio of the total molar amount of a platinum group element(s) other than Pd to the molar amount of Pd is preferably 0.2 or less. The lower limit is zero.

A catalytically-active component containing the first platinum group element is preferably supported on the Al-based oxide. "Supported" means a state in which the catalytically-active component containing the first platinum group element is physically or chemically adsorbed or retained on the outer surface or inner surface of pores of the Al-based oxide. For example, SEM-EDX can be used to confirm that the catalytically-active component containing the first platinum group element is supported on the Al-based oxide.

From the viewpoint of balancing the exhaust gas purification performance and the cost, the content of the first platinum group element in the first layer 21 is preferably 0.01% by mass or more and 15% by mass or less, more preferably 0.05% by mass or more and 10% by mass or less, and still more preferably 0.1% by mass or more and 7.5% by mass or less, based on the mass of the first layer 21. The content of the first platinum group element means, in a case where the first platinum group element is composed of two or more types of elements, the total content of the two or more types of elements. The mass of the first platinum group element means the mass in terms of metal.

The Al-based oxide contained in the first layer 21 can be selected from the first and second Al-based oxides. The first layer 21 may contain one or both of the first and second Al-based oxides.

From the viewpoint of securing the specific surface area of the catalyst, the content of Al in terms of oxide in the first layer 21 is preferably 15% by mass or more, more preferably 20% by mass or more, and still more preferably 25% by mass or more, based on the mass of the first layer 21. Further, from the viewpoint of securing the oxygen storage capacity, the content of Al in terms of oxide in the first layer 21 is preferably 80% by mass or less, more preferably 70% by mass or less, and still more preferably 60% by mass or less, based on the mass of the first layer 21. Each of these upper limit values may be combined with any of the above lower limit values. Of the mass of Al in terms of oxide in the first layer 21, the proportion of the mass of Al in terms of oxide derived from the Al-based oxide is preferably 60% by mass or more, more preferably 70% by mass or more, and still more preferably 90% by mass or more. The upper limit of the proportion is 100% by mass.

Examples of a Ba source contained in the first layer 21 include barium carbonate, barium oxide, barium aluminate, and barium zirconate. Such a Ba source may be an Al-based oxide containing Ba, a Zr-Ln-based complex oxide containing Ba, or the like.

From the viewpoint of enhancing the co-catalyst effect on Pd, the content of Ba in the first layer 21 is preferably 3% by mass or more, more preferably 5% by mass or more, and still more preferably 8% by mass or more, based on the mass of the first layer 21. Further, from the viewpoint of suppressing a decrease in heat resistance due to a reaction between Ba and Al-based oxide or Zr-Ln-based oxide, the content of Ba in the first layer 21 is preferably 30% by mass or less, more preferably 20% by mass or less, and still more preferably 15% by mass or less, based on the mass of the first layer 21. Each of these upper limit values may be combined with any of the above lower limit values. The mass of Ba means the mass in terms of metal (same throughout the present specification).

In a case where the first platinum group element contains Pd and the second platinum group element contains Rh, the content of Ba in the first layer 21 is preferably 8% by mass or more, more preferably 10% by mass or more, and still more preferably 12% by mass or more, based on the mass of the first layer 21. The upper limit is the same as above. Each of the upper limit values may be combined with any of the above lower limit values. Ba absorbs NOx, while Rh has NOx purification performance. Therefore, NOx absorbed by Ba is purified by Rh. This effect is significant when the content of Ba in the first layer 21 is within the above range.

The first layer 21 may contain one or more types of Zr-Ln-based complex oxides, or may not contain a Zr-Ln-based complex oxide. In a case where the first layer 21 contains a Zr-Ln-based complex oxide, a catalytically-active component containing the first platinum group element may be supported on the Zr-Ln-based complex oxide. The meaning of support and the confirmation method that the catalytically-active component is being supported are the same as described above.

The Zr-Ln-based complex oxide contained in the first layer 21 can be selected from the first and second Zr-Ln-based complex oxides. The first layer 21 may contain one or both of the first and second Zr-Ln-based complex oxides.

In a case where the first layer 21 contains a Zr-Ln-based complex oxide, the total of the content of Zr in terms of oxide and the content of Ln in terms of oxide in the first layer 21 is preferably 10% by mass or more and 80% by mass or less, more preferably 20% by mass or more and 75% by mass or less, and still more preferably 30% by mass or more and 65% by mass or less, based on the mass of the first layer 21, from the viewpoint of improving the heat resistance. Of the total of the mass of Zr in terms of oxide and the mass of Ln in terms of oxide in the first layer 21, the proportion of the total of the mass of Zr in terms of oxide and the mass of Ln in terms of oxide, derived from the Zr-Ln-based complex oxide, is preferably 50% by mass or more, more preferably 60% by mass or more, and still more preferably 70% by mass or more. The upper limit of the proportion is 100% by mass.

In a case where the first layer 21 contains a Zr-Ln-based complex oxide, the content of Zr in terms of oxide in the first layer 21 is preferably 5% by mass or more and 60% by mass or less, more preferably 10% by mass or more and 40% by mass or less, and still more preferably 15% by mass or more and 30% by mass or less, based on the mass of the first layer 21, from the viewpoint of improving the heat resistance. Of the mass of Zr in terms of oxide in the first layer 21, the proportion of the mass of Zr in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the first layer 21 contains a Zr-Ln-based complex oxide, the content of Ln in terms of oxide in the first layer 21 is preferably 5% by mass or more and 60% by mass or less, more preferably 10% by mass or more and 50% by mass or less, and still more preferably 20% by mass or more and 40% by mass or less, based on the mass of the first layer 21, from the viewpoint of improving the heat resistance. Of the mass of Ln in terms of oxide in the first layer 21, the proportion of the mass of Ln in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the first layer 21 contains a Zr-Ln-based complex oxide containing Ce, the content of Ce in terms of oxide in the first layer 21 is preferably 5% by mass or more and 50% by mass or less, more preferably 10% by mass or more and 40% by mass or less, and still more preferably 15% by mass or more and 30% by mass or less, based on the mass of the first layer 21, from the viewpoint of improving the oxygen storage capacity. Of the mass of Ce in terms of oxide in the first layer 21, the proportion of the mass of Ce in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the first layer 21 contains a Zr-Ln-based complex oxide containing Ln other than Ce, the content of Ln other than Ce in terms of oxide in the first layer 21 is preferably 1% by mass or more and 15% by mass or less, more preferably 1.5% by mass or more and 10% by mass or less, and still more preferably 2.0% by mass or more and 7.5% by mass or less, based on the mass of the first layer 21, from the viewpoint of improving the heat resistance. Of the mass of Ln other than Ce in terms of oxide in the first layer 21, the proportion of the mass of Ln other than Ce in terms of oxide derived from the Zr-Ln-based complex oxide is preferably 50% by mass or more, more preferably 60% by mass or more, and still more preferably 70% by mass or more. The upper limit of the proportion is 100% by mass.

As shown in Figure 4, the first layer 21 is located between the substrate 10 and the second layer 22. That is, the first layer 21 is provided on the lower side of the second layer 22. The expression "the first layer 21 is provided on the lower side of the second layer 22" means that part or all of the second layer 22 is present on, of two main surfaces of the first layer 21, the main surface opposite to the main surface on the partition wall 12 side of the substrate 10. "The main surface of the first layer 21" means the outer surface of the first layer 21 that extends in the exhaust gas flow direction X. The second layer 22 may be provided directly on the main surface of the first layer 21, or may be provided via another layer. The first layer 21 may be provided directly on the partition wall 12, or may be provided on the partition wall 12 via another layer.

The first layer 21 may be provided on the upper side of the second layer 22. The expression "the first layer 21 is provided on the upper side of the second layer 22" means that part or all of the first layer 21 is present on, of two main surfaces of the second layer 22, the main surface opposite to the main surface on the partition wall 12 side of the substrate 10. "The main surface of the second layer 22" means the outer surface of the second layer 22 that extends in the exhaust gas flow direction X. The first layer 21 may be provided directly on the main surface of the second layer 22, or may be provided via another layer.

However, in a case where the first layer 21 is provided on the upper side of the second layer 22, Ba contained in the first layer 21 is eluted and mixed into the second layer 22, and the second layer 22 may promote sintering of a Zr-Ln-based complex oxide contained in the second layer 22. Therefore, the first layer 21 is preferably provided on the lower side of the second layer 22. This prevents Ba contained in the first layer 21 from eluting into the second layer 22 and promoting the sintering of a Zr-Ln-based complex oxide contained in the second layer 22. As a result, the oxygen storage/release performance of the Zr-Ln-based complex oxide is improved, the dispersibility of the second platinum group element in the second layer 22 is improved, and the exhaust gas purification performance is improved. In particular, the exhaust gas purification performance after being exposed to a high-temperature environment is improved. In the present specification, "high temperature" means a temperature exceeding the low temperature.

**<Second layer>**

The second layer 22 will be described below.
The second layer 22 contains a second platinum group element and a complex oxide containing zirconium element and a rare earth element (Zr-Ln-based complex oxide).
The second platinum group element contained in the second layer 22 is composed of one or more types of elements selected from the group of platinum group elements.
The second platinum group element is contained in the second layer 22 in a form that can function as a catalytically-active component, for example, in the form of a metal, an alloy, a compound (for example, an oxide), or the like. From the viewpoint of improving exhaust gas purification performance, a catalytically-active component containing the second platinum group element is preferably in the form of a particle.

Since the content of Al in terms of oxide in the second layer 22 is less than 15% by mass, Rh is easily reduced. Further, although the content of Ba in the second layer 22 is less than 3% by mass, Rh exerts exhaust gas purification performance without the coexistence of Ba. Therefore, the second platinum group element preferably contains Rh. In a case where the second layer 22 contains Rh, the exhaust gas purification performance at a low temperature is particularly improved. This effect is significant in a case where the first layer 21 contains Pd and the second layer 22 contains Rh.

In a case where the second platinum group element contains Rh, it is preferable that the total content of a platinum group element(s) other than Rh in the second layer 22 on a molar basis is less than the content of Rh on a molar basis from the viewpoint of preventing deactivation of Rh by alloying Rh with the platinum group element(s) other than Rh. In the second layer 22, the ratio of the total molar amount of a platinum group element(s) other than Rh to the molar amount of Rh is preferably 0.2 or less. The lower limit is zero.

A catalytically-active component containing the second platinum group element is preferably supported on the Zr-Ln-based complex oxide. The meaning of support and the confirmation method that the catalytically-active component is being supported are the same as described above.

From the viewpoint of balancing the exhaust gas purification performance and the cost, the content of the second platinum group element in the second layer 22 is preferably 0.01% by mass or more and 10% by mass or less, more preferably 0.05% by mass or more and 7.5% by mass or less, and still more preferably 0.1% by mass or more and 5.0% by mass or less, based on the mass of the second layer 22. The content of the second platinum group element means, in a case where the second platinum group element is composed of two or more types of elements, the total content of the two or more types of elements. The mass of the second platinum group element means the mass in terms of metal.

The second layer 22 may contain one type of Zr-Ln-based complex oxide or may contain two or more types of Zr-Ln-based complex oxides. The second layer 22 may contain one or both of the first and second Zr-Ln-based complex oxides.

From the viewpoint of improving the heat resistance, the total of the content of Zr in terms of oxide and the content of Ln in terms of oxide in the second layer 22 is preferably 80% by mass or more, more preferably 90% by mass or more, and still more preferably 95% by mass or more, based on the mass of the second layer 22. Further, from the viewpoint of ensuring the amounts of other components such as a platinum group element and a co-catalyst component, the total of the content of Zr in terms of oxide and the content of Ln in terms of oxide in the second layer is preferably 99.9% by mass or less, more preferably 99.8% by mass or less, and still more preferably 99.7% by mass or less, based on the mass of the second layer. Each of these upper limit values may be combined with any of the above lower limit values. Of the total of the mass of Zr in terms of oxide and the mass of Ln in terms of oxide in the second layer 22, the proportion of the total of the mass of Zr in terms of oxide and the mass Ln in terms of oxide, derived from a Zr-Ln-based complex oxide, is preferably 50% by mass or more, more preferably 60% by mass or more, and still more preferably 70% by mass or more. The upper limit of the proportion is 100% by mass.

From the viewpoint of improving the heat resistance, the content of Zr in terms of oxide in the second layer 22 is preferably 30% by mass or more and 95% by mass or less, more preferably 40% by mass or more and 90% by mass or less, and still more preferably 50% by mass or more and 85% by mass or less, based on the mass of the second layer 22. Of the mass of Zr in terms of oxide in the second layer 22, the proportion of the mass of Zr in terms of oxide derived from a Zr-Ln-based complex oxide is preferably 50% by mass or more, more preferably 60% by mass or more, and still more preferably 70% by mass or more. The upper limit of the proportion is 100% by mass.

In a case where the second layer 22 contains a Zr-Ln-based complex oxide containing Ce, from the viewpoint of improving the oxygen storage capacity, the content of Ce in terms of oxide in the second layer 22 is preferably 1% by mass or more and 50% by mass or less, more preferably 3% by mass or more and 30% by mass or less, and still more preferably 6% by mass or more and 20% by mass or less, based on the mass of the second layer 22. Of the mass of Ce in terms of oxide in the second layer 22, the proportion of the mass of Ce in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the second layer 22 contains a Zr-Ln-based complex oxide containing Ln other than Ce, from the viewpoint of improving the heat resistance, the content of Ln other than Ce in terms of oxide in the second layer 22 is preferably 1% by mass or more and 30% by mass or less, more preferably 2% by mass or more and 20% by mass or less, and still more preferably 3% by mass or more and 15% by mass or less, based on the mass of the second layer 22. Of the mass of Ln other than Ce in terms of oxide in the second layer 22, the proportion of the mass of Ln other than Ce in terms of oxide derived from the Zr-Ln-based complex oxide is preferably 50% by mass or more, more preferably 60% by mass or more, and still more preferably 70% by mass or more. The upper limit of the proportion is 100% by mass.

The second layer 22 may contain an Al-based oxide and/or Ba. In a case where the second layer 22 contains an Al-based oxide, a catalytically-active component containing the second platinum group element may be supported on the Al-based oxide. The meaning of support and the confirmation method that the catalytically-active component is being supported are the same as described above.

The Al-based oxide contained in the second layer 22 can be selected from the first and second Al-based oxides. The second layer 22 may contain one or both of the first and second Al-based oxides.

From the viewpoint of preventing the promotion of the sintering of a Zr-Ln-based complex oxide due to Al, improving the oxygen storage/release performance of the Zr-Ln-based complex oxide, improving the dispersibility of the second platinum group element in the second layer 22, and thus improving the exhaust gas purification performance (in particular, the performance of exhaust gas purification performance after being exposed to a high-temperature environment), the content of Al in terms of oxide in the second layer 22 is preferably less than 15% by mass, more preferably 5% by mass or less, and still more preferably 1% by mass or less, based on the mass of the second layer 22. The lower limit of the content of Al in terms of oxide in the second layer 22 is zero. The content of Al in terms of oxide in the second layer 22 may be, for example, 0.01% by mass or more, 0.1 % by mass or more, or 0.5% by mass or more, based on the mass of the second layer 22. Each of these lower limit values may be combined with any of the above upper limit values.

Examples of a Ba source include barium carbonate, barium oxide, barium nitrate, barium aluminate, and barium zirconate. A Ba source may be an Al-based oxide containing Ba, a Zr-Ln-based complex oxide containing Ba, or the like.

From the viewpoint of preventing the promotion of the sintering of a Zr-Ln-based complex oxide due to Ba, improving the oxygen storage/release performance of the Zr-Ln-based complex oxide, improving the dispersibility of the second platinum group element in the second layer 22, and thus improving the exhaust gas purification performance (in particular, the performance of exhaust gas purification performance after being exposed to a high-temperature environment), the content of Ba in the second layer 22 is preferably less than 3% by mass, more preferably 1.5% by mass or less, and still more preferably 0.5% by mass or less, based on the mass of the second layer 22. The lower limit of the content of Ba in the second layer 22 is zero. The content of Ba in the second layer 22 may be, for example, 0.01% by mass or more, 0.05% by mass or more, or 0.1% by mass or more, based on the mass of the second layer 22. Each of these lower limit values may be combined with any of the above upper limit values.

As shown in Figure 4, the second layer 22 is the outermost layer of the catalyst layer 20A. The "outermost layer" means a layer forming, of two main surfaces of the catalyst layer 20A, the main surface opposite to the main surface on the partition wall 12 side of the substrate 10.

Another layer may be provided on the upper side of the second layer 22 (in this case, the other layer is the outermost layer), but it is preferable that the second layer 22 is the outermost layer from the viewpoint of improving the contact efficiency between the platinum group element contained in the second layer 22 and the exhaust gas and improving the exhaust gas purification performance.

**<Method for forming catalyst layer>**

A method for forming the catalyst layer 20A will be described below.

A substrate 10, a slurry for forming the first layer 21, and a slurry for forming the second layer 22 are prepared.

The compositions of the slurries for forming the first layer 21 and the second layer 22 are adjusted depending on the compositions of the first layer 21 and the second layer 22, respectively. The slurry contains, for example, a platinum group element supply source, a Ba supply source, an Al-based oxide, a Zr-Ln-based complex oxide, a binder, a solvent, and the like. Examples of a supply source of a noble metal element include salts of the noble metal element, and examples of the salt of the noble metal element include nitrates, ammine complex salts, acetates, and chlorides. Examples of the Ba supply source include barium carbonate, barium nitrate, and barium acetate. Examples of the binder include alumina sol, zirconia sol, titania sol, silica sol, and ceria sol. Examples of the solvent include water and organic solvents.

The slurry for forming the first layer 21 is applied to the substrate 10, dried, and calcined, and the slurry for forming the second layer 22 is then applied to the substrate 10, dried, and calcined to form the catalyst layer 20A. The slurry can be applied, for example, by dipping the whole substrate 10 in the slurry or by dipping the end on the exhaust gas inflow side or exhaust gas outflow side of the substrate 10 in the slurry and sucking the slurry from the opposite side. The drying temperature is, for example, 50°C or more and 200°C or less, the drying time is, for example, 0.1 hours or more and 12 hours or less, the calcining temperature is, for example, 400°C or more and 700°C or less, and the calcining time is, for example, 0.5 hours or more and 8 hours or less. Calcining may be performed, for example, in an air atmosphere.

**<Second embodiment>**

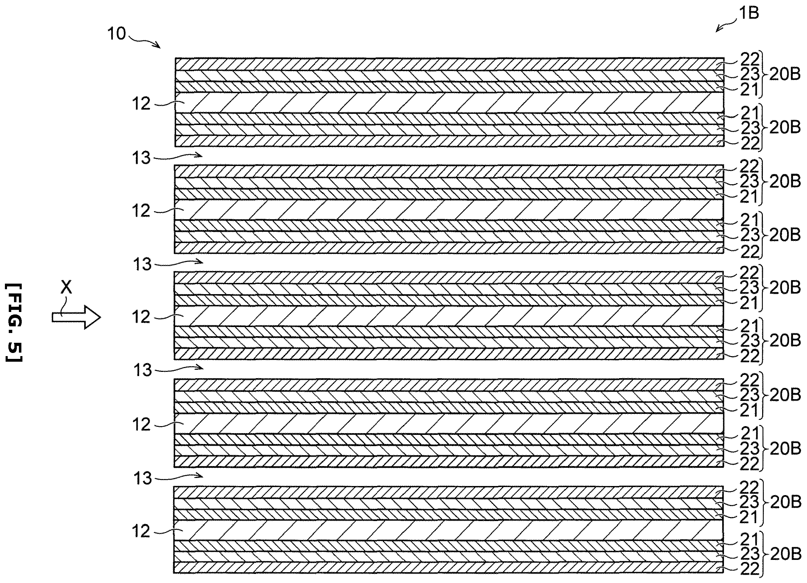

An exhaust gas purification catalyst 1B according to a second embodiment of the present invention will be described below with reference to Figure 5. In the exhaust gas purification catalyst 1B, the same member and portion as those of the exhaust gas purification catalyst 1A are denoted by the same reference signs as those of the exhaust gas purification catalyst 1A. Unless otherwise specified, the above descriptions regarding the exhaust gas purification catalyst 1A also apply to the exhaust gas purification catalyst 1B.

As shown in Figure 5, the exhaust gas purification catalyst 1B differs from the exhaust gas purification catalyst 1A in including the catalyst layer 20B.

As shown in Figure 5, the catalyst layer 20B differs from the catalyst layer 20A in including a third layer 23. Unless otherwise specified, the above descriptions regarding the catalyst layer 20A also apply to the catalyst layer 20B.

From the viewpoint of sufficiently exhibiting the oxygen storage/release performance, the third layer 23 is preferably located between the first layer 21 and the second layer 22 as shown in Figure 5.

The third layer 23 contains a third platinum group element.

The third platinum group element is composed of one or more types of elements selected from the group of platinum group elements.

The third platinum group element is contained in the third layer 23 in a form that can function as a catalytically-active component, for example, in the form of a metal, an alloy, a compound (for example, an oxide), or the like. From the viewpoint of improving exhaust gas purification performance, a catalytically-active component containing the third platinum group element is preferably in the form of a particle.

From the viewpoint of sufficiently exhibiting the oxygen storage/release performance, the third platinum group element preferably contains Pd.

In a case where the third platinum group element contains Pd, it is preferable that the total content of a platinum group element(s) other than Pd in the third layer 23 on a molar basis is less than the content of Pd on a molar basis from the viewpoint of preventing deactivation of Pd by alloying Pd with the platinum group element(s) other than Pd. In the third layer 23, the ratio of the total molar amount of the platinum group element(s) other than Pd to the molar amount of Pd is preferably 0.2 or less. The lower limit is zero.

The third platinum group element is preferably supported on an Al-based oxide and/or a Zr-Ln-based complex oxide. The meaning of support and the confirmation method that the catalytically-active component is being supported are the same as described above.

From the viewpoint of balancing the exhaust gas purification performance and the cost, the content of the third platinum group element in the third layer 23 is preferably 0.01% by mass or more and 10% by mass or less, more preferably 0.05% by mass or more and 7.5% by mass or less, and still more preferably 0.1% by mass or more and 5.0% by mass or less, based on the mass of the third layer 23. The content of the third platinum group element means, in a case where the third platinum group element is composed of two or more types of elements, the total content of the two or more types of elements. The mass of the third platinum group element means the mass in terms of metal.

The third layer 23 preferably contains a Zr-Ln-based complex oxide. The Zr-Ln-based complex oxide contained in the third layer 23 can be selected from the first and second Zr-Ln-based complex oxides. The third layer 23 may contain one or both of the first and second Zr-Ln-based complex oxides.

In a case where the third layer 23 contains a Zr-Ln-based complex oxide, from the viewpoint of improving the heat resistance, the total of the content of Zr in terms of oxide and the content of Ln in terms of oxide in the third layer 23 is preferably 80% by mass or more and 99.9% by mass or less, more preferably 90% by mass or more and 99.7% by mass or less, and still more preferably 95% by mass or more and 99.5% by mass or less, based on the mass of the third layer 23. Of the total of the mass of Zr in terms of oxide and the mass of Ln in terms of oxide in the third layer 23, the proportion of the total of the mass of Zr in terms of oxide and the mass of Ln in terms of oxide, derived from the Zr-Ln-based complex oxide, is preferably 50% by mass or more, more preferably 60% by mass or more, and still more preferably 70% by mass or more. The upper limit of the proportion is 100% by mass.

In a case where the third layer 23 contains a Zr-Ln-based complex oxide, from the viewpoint of improving the heat resistance, the content of Zr in terms of oxide in the third layer 23 is preferably 20% by mass or more and 90% by mass or less, more preferably 30% by mass or more and 80% by mass or less, and still more preferably 35% by mass or more and 70% by mass or less, based on the mass of the third layer 23. Of the mass of Zr in terms of oxide in the third layer 23, the proportion of the mass of Zr in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the third layer 23 contains a Zr-Ln-based complex oxide, from the viewpoint of improving the heat resistance, the content of Ln in terms of oxide in the third layer 23 is preferably 10% by mass or more and 80% by mass or less, more preferably 20% by mass or more and 70% by mass or less, and still more preferably 30% by mass or more and 60% by mass or less, based on the mass of the third layer 23. Of the mass of Ln in terms of oxide in the third layer 23, the proportion of the mass of Ln in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the third layer 23 contains a Zr-Ln-based complex oxide containing Ce, from the viewpoint of improving the oxygen storage capacity, the content of Ce in terms of oxide in the third layer 23 is preferably 5% by mass or more and 80% by mass or less, more preferably 10% by mass or more and 70% by mass or less, and still more preferably 20% by mass or more and 60% by mass or less, based on the mass of the third layer 23. Of the mass of Ce in terms of oxide in the third layer 23, the proportion of the mass of Ce in terms of oxide derived from the Zr-Ln-based complex oxide is preferably 50% by mass or more, more preferably 60% by mass or more, and still more preferably 70% by mass or more. The upper limit of the proportion is 100% by mass.

In a case where the third layer 23 contains a Zr-Ln-based complex oxide containing Ln other than Ce, from the viewpoint of improving the heat resistance, the content of Ln other than Ce in terms of oxide in the third layer 23 is preferably 1.0% by mass or more and 40% by mass or less, more preferably 2.5% by mass or more and 30% by mass or less, and still more preferably 4.0% by mass or more and 20% by mass or less, based on the mass of the third layer 23. Of the mass of Ln other than Ce in terms of oxide in the third layer 23, the proportion of the mass of Ln other than Ce in terms of oxide derived from the Zr-Ln-based complex oxide is preferably 50% by mass or more, more preferably 60% by mass or more, and still more preferably 70% by mass or more. The upper limit of the proportion is 100% by mass.

The third layer 23 may contain an Al-based oxide.

The Al-based oxide contained in the third layer 23 can be selected from the first and second Al-based oxides. The third layer 23 may contain one or both of the first and second Al-based oxides.

From the viewpoint of preventing the promotion of the sintering of a Zr-Ln-based complex oxide due to Al, improving the oxygen storage/release performance of the Zr-Ln-based complex oxide, improving the dispersibility of the third platinum group element in the third layer 23, and thus improving the exhaust gas purification performance (in particular, the performance of exhaust gas purification performance after being exposed to a high-temperature environment), the content of Al in terms of oxide in the third layer 23 is preferably less than 15% by mass, more preferably 5% by mass or less, and still more preferably 1% by mass or less, based on the mass of the third layer 23. The lower limit of the content of Al in terms of oxide in the third layer 23 is zero. The content of Al in terms of oxide in the third layer 23 may be, for example, 0.01% by mass or more, 0.1 % by mass or more, or 0.5% by mass or more, based on the mass of the third layer 23. Each of these lower limit values may be combined with any of the above upper limit values.

The third layer 23 may contain Ba. Ba may be contained in the third layer 23 in the form of, for example, barium carbonate, barium oxide, barium nitrate, barium aluminate, barium zirconate, or the like. The Ba source contained in the third layer 23 may be an Al-based oxide containing Ba, a Zr-Ln-based complex oxide containing Ba, or the like.

From the viewpoint of preventing the promotion of the sintering of a Zr-Ln-based complex oxide due to Ba, improving the oxygen storage/release performance of the Zr-Ln-based complex oxide, improving the dispersibility of the third platinum group element in the third layer 23, and thus improving the exhaust gas purification performance (in particular, the performance of exhaust gas purification performance after being exposed to a high-temperature environment), the content of Ba in the third layer 23 is preferably 8% by mass or less, more preferably 6% by mass or less, still more preferably 3% by mass or less, still more preferably 1% by mass or less, and still more preferably 0.5% by mass or less, based on the mass of the third layer 23. The lower limit of the content of Ba in the third layer 23 is zero. The content of Ba in the third layer 23 may be, for example, 0.01% by mass or more, 0.05% by mass or more, or 0.1% by mass or more, based on the mass of the third layer 23. Each of these lower limit values may be combined with any of the above upper limit values.

A method for forming the catalyst layer 20B will be described below. Unless otherwise specified, the above descriptions regarding the method of forming catalyst layer 20A also apply to the method of forming catalyst layer 20B.

A substrate 10, a slurry for forming the first layer 21, a slurry for forming the second layer 22, a slurry for forming the third layer 23 are prepared.

The compositions of the slurries for forming the first layer 21, the second layer 22, and the third layer 23 are adjusted depending on the compositions of the first layer 21, the second layer 22, and the third layer 23, respectively.

The slurry for forming the first layer 21 is applied to the substrate 10, dried, and calcined; the slurry for forming the third layer 23 is then applied to the substrate 10, dried, and calcined; and the slurry for forming the second layer 22 is then applied to the substrate 10, dried, and calcined to form the catalyst layer 20B.

**<Third embodiment>**

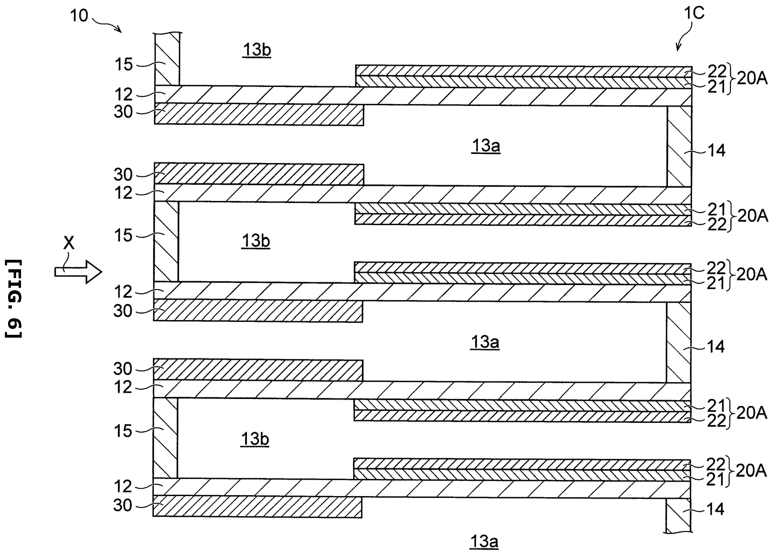

An exhaust gas purification catalyst 1C according to a third embodiment of the present invention will be described below with reference to Figure 6. In the exhaust gas purification catalyst 1C, the same member and portion as those of the exhaust gas purification catalyst 1A are denoted by the same reference signs as those of the exhaust gas purification catalyst 1A. Unless otherwise specified, the above descriptions regarding the exhaust gas purification catalyst 1A also apply to the exhaust gas purification catalyst 1C.

As shown in Figure 6, the exhaust gas purification catalyst 1C differ from the exhaust gas purification catalyst 1A in that:

the substrate 10 is provided with a first sealing member 14 that seals the ends of some of the cells 13 on the exhaust gas outflow side and a second sealing member 15 that seals the ends of the remaining cells 13 on the exhaust gas inflow side, so that some of the cells 13 are each an inflow-side cell 13a in which the end on the exhaust gas inflow side is open and the end on the exhaust gas outflow side is closed by the first sealing member 14, and the remaining cells 13 are each an outflow-side cell 13b in which the end on the exhaust gas inflow side is closed by the second sealing member 15 and the end on the exhaust gas outflow side is open; and

a catalyst layer 30 is provided on the inflow-side cell 13a side of the partition wall 12 of the substrate 10, and a catalyst layer 20A is provided on the outflow-side cell 13b side of the partition wall 12 of the substrate 10.

As shown in Figure 6, a plurality of (for example, four) outflow-side cells 13b are arranged around and adjacent to one inflow-side cell 13a, and the inflow-side cell 13a and the outflow-side cells 13b adjacent to the inflow-side cell 13a are separated from one another by the porous partition wall 12.

As shown in Figure 6, the catalyst layer 30 extends from the end on the exhaust gas inflow side of the partition wall 12 along the exhaust gas flow direction X, and the catalyst layer 20A extends from the end on the exhaust gas outflow side of the partition wall 12 along the direction opposite to the exhaust gas flow direction X. That is, the catalyst layer 30 is provided on the upstream side of the catalyst layer 20A.

In the exhaust gas purification catalyst 1C, the exhaust gas that has flowed in from the end (opening) on the exhaust gas inflow side of the inflow-side cell 13a passes through the porous partition wall 12 and flows out from the end (opening) on the exhaust gas outflow side of the outflow-side cell 13b. Such a mode is called a wall-flow type.

In the exhaust gas purification catalyst 1C, when the exhaust gas that has flowed in from the end (opening) on the exhaust gas inflow side of the inflow-side cell 13a passes through the porous partition wall 12, particulate matter (PM) in the exhaust gas is collected in the pores of the partition wall 12. Therefore, the exhaust gas purification catalyst 1C is useful as a particulate filter for gasoline engines or as a diesel particulate filter for diesel engines.

As shown in Figure 6, the catalyst layer 20A includes a first layer 21 and a second layer 22. The above descriptions regarding the catalyst layer 20A also apply to the third embodiment.

As shown in Figure 6, the catalyst layer 30 has a single-layer structure, but may have a laminated structure. The catalyst layer 30 can be configured similarly to known catalyst layers.

In the exhaust gas purification catalyst 1C, the catalyst layer 20A may be provided on the inflow-side cell 13a side of the partition wall 12 of the substrate 10, and the catalyst layer 30 may be provided on the outflow-side cell 13b side of the partition wall 12 of the substrate 10.

In the exhaust gas purification catalyst 1C, the catalyst layer 20A may be provided on the inflow-side cell 13a side of the partition wall 12 of the substrate 10. That is, the catalyst layer 20A may be provided on both the inflow-side cell 13a side and the outflow-side cell 13b side of the partition wall 12 of the substrate 10.

**<Fourth embodiment>**

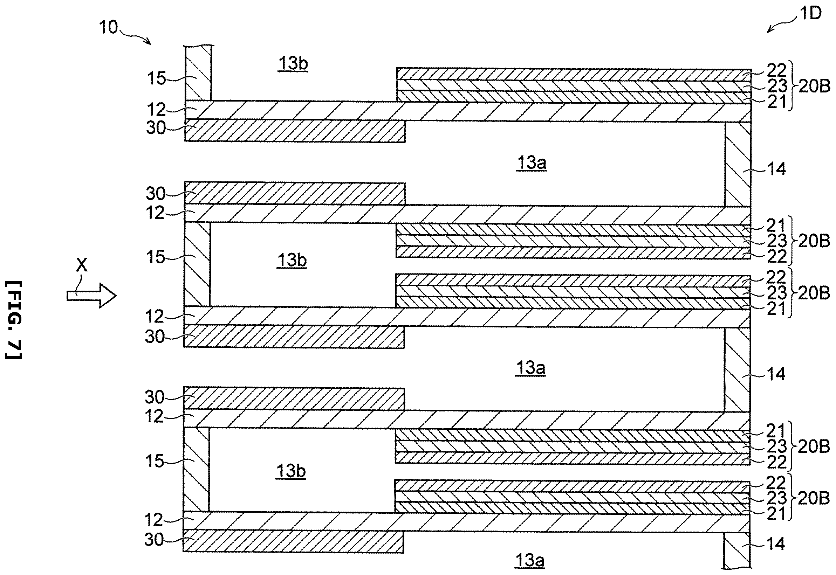

An exhaust gas purification catalyst 1D according to a fourth embodiment of the present invention will be described below with reference to Figure 7. In the exhaust gas purification catalyst 1D, the same member and portion as those of the exhaust gas purification catalyst 1C are denoted by the same reference signs as those of the exhaust gas purification catalyst 1C. Unless otherwise specified, the above descriptions of the exhaust gas purification catalyst 1C also apply to the exhaust gas purification catalyst 1D.

As shown in Figure 7, the exhaust gas purification catalyst 1D differs from the exhaust gas purification catalyst 1C in including the catalyst layer 20B. The above descriptions regarding the catalyst layer 20B also apply to the fourth embodiment.

**<<Exhaust gas purification system>>**

An exhaust gas purification system of the present invention will be described below.

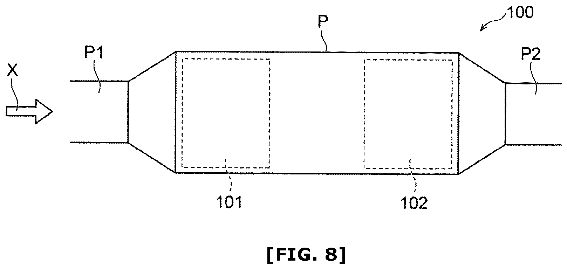

An exhaust gas purification system 100 according to one embodiment of the present invention will be described below with reference to Figure 8.

As shown in Figure 8, the exhaust gas purification system 100 includes an exhaust pipe P, a first exhaust gas purification catalyst 101 provided on the upstream side in the exhaust gas path in the exhaust pipe P, and a second exhaust gas purification catalyst 102 provided on the downstream side in the exhaust gas path in the exhaust pipe P.

One end P1 of the exhaust pipe P is connected to an internal combustion engine, and exhaust gas emitted from the internal combustion engine flows through the exhaust pipe P from the one end P1 to the other end P2. That is, the exhaust pipe P forms an exhaust gas path through which exhaust gas flows. In each drawing, the exhaust gas flow direction is denoted by the reference sign X. The exhaust gas flowing through the exhaust pipe P is treated by the first exhaust gas purification catalyst 101 provided on the upstream side of the exhaust gas path in the exhaust pipe P, and the exhaust gas that passed through the first exhaust gas purification catalyst 101 is treated by the second exhaust gas purification catalyst 102 provided on the downstream side of the exhaust gas path in the exhaust pipe P.

As the second exhaust gas purification catalyst 102, the exhaust gas purification catalyst of the present invention (for example, the exhaust gas purification catalyst 1A, 1B, 1C or 1D) is used.

As the first exhaust gas purification catalyst 101, the exhaust gas purification catalyst of the present invention (for example, the exhaust gas purification catalyst 1A, 1B, 1C or 1D) may be used. In a case where an exhaust gas purification catalyst other than the exhaust gas purification catalyst of the present invention is used as the first exhaust gas purification catalyst 101, the first exhaust gas purification catalyst 101 may be configured in the same manner as a known exhaust gas purification catalyst.

In a case where the first exhaust gas purification catalyst 101 functions as a catalytic converter and the second exhaust gas purification catalyst 102 functions as a GPF, the exhaust gas purification catalyst 1C or 1D is preferably used as the second exhaust gas purification catalyst 102.

## EXAMPLES

The following Zr-Ln-based complex oxides (CZ material, ZC material, and NZ material) and lanthanum oxide-modified alumina were prepared.

[CZ Material]

Ce amount in terms of oxide: 45% by mass, Zr amount in terms of oxide: 45% by mass, La amount in terms of oxide: 5% by mass, Nd amount in terms of oxide: 5% by mass, specific surface area: 70 $m^2/g$

[ZC Material]

Ce amount in terms of oxide: 20% by mass, Zr amount in terms of oxide: 70% by mass, Nd amount in terms of oxide: 10% by mass, specific surface area: 65 $m^2/g$

[NZ Material]

Zr amount in terms of oxide: 90% by mass, Nd amount in terms of oxide: 10% by mass, specific surface area: 80 $m^2/g$

[Lanthanum Oxide-modified Alumina]

Al amount in terms of oxide: 99% by mass, La amount in terms of oxide: 1% by mass, specific surface area: 120 $m^2/g$

In all of the CZ material, ZC material, and NZ material, the oxide of Zr ($ZrO_2$) and the oxide of the rare earth element (Ln) formed a solid solution.

## <Example 1>

(1) Formation of first layer

To a ball mill pot, lanthanum oxide-modified alumina, barium acetate, a CZ material, a binder (alumina sol), and water were added, and the resulting mixture was mixed and pulverized using a ball mill to yield a first base slurry. This first base slurry and an aqueous palladium nitrate solution were mixed to yield a first slurry. The composition of the first slurry was adjusted so that the composition of the first layer formed from the first slurry was as shown in Table 1.

The mixing and pulverization using a ball mill was carried out until $D_{50}$ and $D_{90}$ in the cumulative undersize distribution of the base slurry constituent material were 12 $\mu$m or less, and 20 $\mu$m or more and 35 $\mu$m or less, respectively. $D_{50}$ and $D_{90}$ are particle sizes in which the cumulative volumes reach 50% and 90%, respectively, in the volume-based particle size distribution of the base slurry constituent material as measured by the laser diffraction scattering particle size distribution measurement method. The laser diffraction scattering particle size distribution measurement method was performed by: introducing the base slurry constituent material into an aqueous dispersion medium (for example, pure water) using an automatic sample feeder ("Microtorac SDC" manufactured by MicrotracBEL Corporation) and irradiating 40-W ultrasonic waves for 360 seconds at a flow rate of 26 mL/sec, followed by measurement using a laser diffraction scattering particle size distribution analyzer (manufactured by MicrotracBEL Corporation "Microtrac MT3300EXII"). The measurement of $D_{50}$ was performed twice, under the conditions of particle refractive index of 1.5, a particle shape of "true sphere," a solvent refractive index of 1.3, "set-zero" for 30 seconds, and a measurement time of 30 seconds, and the mean value of the measured values is taken as $D_{50}$. The same was also applied to $D_{90}$.

A ceramic honeycomb substrate (diameter: 25.4 mm, length: 40 mm, cells: 600 cells/square inch) was dipped in the first slurry, and excess slurry was removed to apply the first slurry onto a wall surface inside the substrate. The substrate coated with the first slurry was dried at 150°C for 2.5 hours and then calcined at 500°C for 2.5 hours to form the first layer on the wall surface inside the substrate. The amount (washcoat amount) of the first layer per unit volume of the substrate was 114 g/L.

(2) Formation of second layer

To a ball mill pot, a NZ material, a ZC material, a binder (zirconia sol), and water were added, and the resulting mixture was mixed and pulverized using a ball mill to yield a second base slurry. This second slurry and an aqueous rhodium nitrate solution were mixed to yield a second slurry. The composition of the second slurry was adjusted so that the composition of the second layer formed from the second slurry was as shown in Table 1. The mixing and pulverization using a ball mill was carried out until $D_{50}$ in the integrated sub-sieve distribution of the base slurry constituent material was 10 $\mu$m or less. The meaning and the measurement method of $D_{50}$ are the same as above.

The substrate having the first layer formed therein was dipped in the second slurry, and excess slurry was removed to apply the second slurry onto the first layer. The substrate coated with the second slurry was dried at 150°C for 2.5 hours and then calcined at 500°C for 2.5 hours to form the second layer on the first layer. The amount (washcoat amount) of the second layer per unit volume of the substrate was 50.5 g/L.

<Example 2>

The first layer was formed on the wall surface inside the substrate in the same manner as in Example 1, except that lanthanum oxide-modified alumina, barium acetate, a binder (alumina sol), and water were added to a ball mill pot, and the resulting mixture was mixed and pulverized using a ball mill to yield a first base slurry and that the composition of the first slurry was adjusted so that the composition of the first layer formed from the first slurry was as shown in Table 1. The amount (washcoat amount) of the first layer per unit volume of the substrate was 47 g/L.

To a ball mill pot, barium acetate, a CZ material, a binder (alumina sol), and water were added and mixed, and the resulting mixture was pulverized using a ball mill to yield a third base slurry. This third base slurry and an aqueous palladium nitrate solution were mixed to yield a third slurry. The composition of the third slurry was adjusted so that the composition of the third layer formed from the third slurry was as shown in Table 1. The mixing and pulverization using a ball mill was carried out until $D_{50}$ and $D_{90}$ in the integrated sub-sieve distribution of the base slurry constituent material were 12 $\mu$m or less, and 20 $\mu$m or more and 35 $\mu$m or less, respectively. The meaning and the measurement method of $D_{50}$ and $D_{90}$ are the same as above.

The substrate having the first layer formed therein was dipped in the third slurry, and excess slurry was removed to apply the third slurry onto the first layer. The substrate coated with the third slurry was dried at 150°C for 2.5 hours and then calcined at 500°C for 2.5 hours to form the third layer on the first layer. The amount (washcoat amount) of the third layer per unit volume of the substrate was 67 g/L.

The substrate having the third layer formed therein was dipped in the second slurry obtained in the same manner as in Example 1, and excess slurry was removed to apply the second slurry onto the third layer. The substrate coated with the second slurry was dried at 150°C for 2.5 hours and then calcined at 500°C for 2.5 hours to form the second layer on the third layer. The amount (washcoat amount) of the second layer per unit volume of the substrate was 50.5 g/L.

<Example 3>

The first layer was formed on the wall surface inside the substrate in the same manner as in Example 2, except that lanthanum oxide-modified alumina, barium acetate, a binder (alumina sol), and water were added to a ball mill pot, and the resulting mixture was mixed and pulverized using a ball mill to yield a first base slurry and that the composition of the first slurry was adjusted so that the composition of the first layer formed from the first slurry was as shown in Table 1. The amount (washcoat amount) of the first layer per unit volume of the substrate was 52 g/L.

The third layer was formed on the first layer in the same manner as in Example 2, except that a CZ material, a binder (alumina sol), and water were added to a ball mill pot, and the resulting mixture was mixed and pulverized using a ball mill to yield a third base slurry and that the composition of the third slurry was adjusted so that the composition of the third layer formed from the third slurry was as shown in Table 1. The amount (washcoat amount) of the third layer per unit volume of the substrate was 62 g/L.

In the same manner as in Example 2, the second layer was formed on the third layer. The amount (washcoat amount) of the first layer per unit volume of the substrate was 50.5 g/L.

<Comparative Example 1>

In the same manner as in Example 1, the first layer was formed on the wall surface inside the substrate. The amount (washcoat amount) of the first layer per unit volume of the substrate was 114 g/L.

The second layer was formed on the first layer in the same manner as in Example 1, except that lanthanum oxide-modified alumina, a ZC material, a binder (alumina sol), and water were added to a ball mill pot, and the resulting mixture was mixed and pulverized using a ball mill to yield a second base slurry and that the composition of the second slurry was adjusted so that the composition of the second layer formed from the second slurry was as shown in Table 1. The amount (washcoat amount) of the second layer per unit volume of the substrate was 50.5 g/L.

<Comparative Example 2>

The first layer was formed on the wall surface inside the substrate in the same manner as in Example 1, except that barium acetate, a NZ material, a CZ material, a binder (zirconia sol), and water were added to a ball mill pot, and the resulting mixture was mixed and pulverized using a ball mill to yield a first base slurry and that the composition of the first slurry was adjusted so that the composition of the first layer formed from the first slurry was as shown in Table 1. The amount (washcoat amount) of the first layer per unit volume of the substrate was 114 g/L.

In the same manner as in Example 1, the second layer was formed on the first layer. The amount (washcoat amount) of the second layer per unit volume of the substrate was 50.5 g/L.

<Comparative Example 3>

The first layer was formed on the wall surface inside the substrate in the same manner as in Example 1, except that a NZ material, a CZ material, a binder (zirconia sol), and water were added to a ball mill pot, and the resulting mixture was mixed and pulverized using a ball mill to yield a first base slurry and that the composition of the first slurry was adjusted so that the composition of the first layer formed from the first slurry was as shown in Table 1. The amount (washcoat amount) of the first layer per unit volume of the substrate was 114 g/L.

In the same manner as in Example 1, the second layer was formed on the first layer. The amount (washcoat amount) of the second layer per unit volume of the substrate was 50.5 g/L.

<Comparative Example 4>

The first layer was formed on the wall surface inside the substrate in the same manner as in Example 1, except that a NZ material, a CZ material, a ZC material, a binder (zirconia sol), and water were added to a ball mill pot, and the resulting mixture was mixed and pulverized using a ball mill to yield a first base slurry, that the composition of the first slurry was adjusted so that the composition of the first layer formed from the first slurry was as shown in Table 1, and that the second layer was not formed. The amount (washcoat amount) of the first layer per unit volume of the substrate was 164 g/L.

The exhaust gas purification catalysts of Examples 1 to 3 and Comparative Examples 1 to 4 were obtained as described above.

The exhaust gas purification catalysts of Example 1 and Comparative Examples 1 to 3 include a substrate, a first layer provided on the substrate, and a second layer provided on the first layer. The exhaust gas purification catalysts of Examples 2 and 3 include a substrate, a first layer provided on the substrate, a third layer provided on the first layer, and a second layer provided on the third layer. The exhaust gas purification catalysts of Comparative Example 4 include a substrate and a first layer provided on the substrate.

The content of Pd in terms of metal (% by mass), the content of Rh in terms of metal (% by mass), the content of Al in terms of oxide (% by mass), the content of Ba in terms of metal (% by mass), the content of Zr in terms of oxide (% by mass), the content of Ce in terms of oxide (% by mass), the content of Ln other than Ce in terms of oxide (% by mass), and the total of the content of Zr in terms of oxide and the content of Ln in terms of oxide (% by mass) in each layer of the exhaust gas purification catalysts of Examples 1 to 3 and Comparative Examples 1 to 4 are shown in Table 2.

[Table 1]

| | | Amount per Unit Volume of Substrate (g/L) | | | | | | | | | |
|---|---|---|---|---|---|---|---|---|---|---|---|
| | | Pd | Rh | Lanthanum Oxide-modified Alumina | Barium Carbonate | NZ Material | CZ Material | ZC Material | Binder (Alumina Sol) | Binder (Zirconia Sol) | Total |
| Example 1 | First Layer | 4 | - | 35 | 10 | - | 55 | - | 10 | - | 114 |
| | Second Layer | - | 0.5 | - | - | 15 | - | 30 | - | 5 | 50.5 |
| Example 2 | First Layer | 2 | - | 35 | 5 | - | - | - | 5 | - | 47 |
| | Third Layer | 2 | - | - | 5 | - | 55 | - | 5 | - | 67 |
| | Second Layer | - | 0.5 | - | - | 15 | - | 30 | - | 5 | 50.5 |
| Example 3 | First Layer | 2 | - | 35 | 10 | - | - | - | 5 | - | 52 |
| | Third Layer | 2 | - | - | - | - | 55 | - | - | 5 | 62 |
| | Second Layer | - | 0.5 | - | - | 15 | - | 30 | - | 5 | 50.5 |
| Comparative Example 1 | First Layer | 4 | - | 35 | 10 | - | 55 | - | 10 | - | 114 |
| | Second Layer | - | 0.5 | is | - | - | - | 30 | 5 | - | 50.5 |
| Comparative Example 2 | First Layer | 4 | - | - | 10 | 35 | 55 | - | - | 10 | 114 |
| | Second Layer | - | 0.5 | - | - | 15 | - | 30 | - | 5 | 50.5 |
| Comparative Example 3 | First Layer | 4 | - | - | - | 45 | 55 | - | - | 10 | 114 |
| | Second Layer | - | 0.5 | - | - | 15 | - | 30 | - | 5 | 50.5 |
| Comparative Example 4 | First Layer | 4 | - | - | - | 60 | 55 | 30 | - | 15 | 164 |

[Table 2]

(unit: % by mass)

| | | Content of Pd in terms of Metal | Content of Rh in terms of Metal | Content of Al in terms of Oxide | Content of Ba in terms of Metal | Content of Zr in terms of Oxide | Content of Ce in terms of Oxide | Content of Ln other than Ce in terms of Oxide | Total Content of Zr and Ln in terms of Oxide |
|---|---|---|---|---|---|---|---|---|---|
| Example 1 | First Layer | 3.51 | - | 39.2 | 6.10 | 21.7 | 21.7 | 5.13 | 48.6 |
| | Second Layer | - | 0.99 | - | - | 78.2 | 11.9 | 8.91 | 99.0 |
| Example 2 | First Layer | 4.26 | - | 84.4 | 7.40 | - | - | 0.74 | 0.74 |
| | Third Layer | 2.99 | - | 7.5 | 5.19 | 36.9 | 36.9 | 8.21 | 82.1 |
| | Second Layer | - | 0.99 | - | - | 78.2 | 11.9 | 8.91 | 99.0 |
| Example 3 | First Layer | 3.85 | - | 76.3 | 13.4 | - | - | 0.67 | 0.67 |
| | Third Layer | 3.23 | - | - | - | 48.0 | 39.9 | 8.87 | 96.8 |
| | Second Layer | - | 0.99 | - | - | 78.2 | 11.9 | 8.91 | 99.0 |
| Comparative Example 1 | First Layer | 3.51 | - | 39.2 | 6.10 | 21.7 | 21.7 | 5.13 | 48.6 |
| | Second Layer | - | 0.99 | 39.3 | - | 41.6 | 11.9 | 6.24 | 59.7 |
| Comparative Example 2 | First Layer | 3.51 | - | - | 6.10 | 58.1 | 21.7 | 7.89 | 87.7 |
| | Second Layer | - | 0.99 | - | - | 78.2 | 11.9 | 8.91 | 99.0 |

| | | Content of Pd in terms of Metal | Content of Rh in terms of Metal | Content of Al in terms of Oxide | Content of Ba in terms of Metal | Content of Zr in terms of Oxide | Content of Ce in terms of Oxide | Content of Ln other than Ce in terms of Oxide | Total Content of Zr and Ln in terms of Oxide |
|---|---|---|---|---|---|---|---|---|---|
| | | | | | | | | | (unit: % by mass) |
| Comparative Example 3 | First Layer | 3.51 | - | - | - | 66.0 | 21.7 | 8.77 | 96.5 |
| | Second Layer | - | 0.99 | - | - | 78.2 | 11.9 | 8.91 | 99.0 |
| Comparative Example 4 | First Layer | 2.44 | - | - | - | 70.0 | 18.8 | 8.84 | 97.6 |

EP 4 316 650 A1

**<Exhaust gas purification performance test>**

After each of the exhaust gas purification catalysts of Examples 1 to 3 and Comparative Examples 1 to 4 was subjected to aging treatment, the exhaust gas purification performance was evaluated as follows. The aging treatment was performed by heat treatment at 1000°C for 30 hours under a circulating atmosphere containing 0.50% of $O_2$ gas, 10% of water vapor, and $N_2$ as balance gas.

A model gas having the following composition with an A/F of 14.6 was circulated through the exhaust gas purification catalyst (catalyst volume 15 mL) after aging treatment at 25 L/min while adjusting the CO concentration and $O_2$ concentration so that the A/F varied in the range of 14.4 to 14.8. The temperature of the gas flowing into the exhaust gas purification catalyst was gradually increased from room temperature at a predetermined temperature-increasing rate, and the amount of HC contained in the exhaust gas that passed through the catalyst was determined by the following equipment to obtain the purifying rate based on the following formula. X represents the amount detected when the catalyst was not provided, and Y represents the amount detected after the catalyst was provided.

$$\text{Purifying rate (\%)} = (X - Y)/X \times 100$$

The inlet gas temperature of the catalyst when the purifying rate reached 50%, namely light-off temperature T50, was obtained. The measurement of T50 was carried out while the temperature was being raised. Also, the purifying rate when the inlet gas temperature of the catalyst was 400°C was determined as $\eta$400. The measurement results of T50 and $\eta$400 are shown in Table 3.

[Composition of model gas (by volume)]

CO: 0.3%, $C_3H_6$: 1000 ppmC, NO: 500 ppm, $O_2$: 0.28%, $CO_2$: 14%, $H_2O$: 10%, $N_2$: the balance
[Temperature-increasing rate] 10°C/min
[Evaluation equipment] MOTOR EXHAUST GAS ANALYZER MEXA7100 manufactured by HORIBA, Ltd.

As shown in Table 3, the exhaust gas purification catalysts of Examples 1 to 3 gave good results in both T50 and $\eta$400. On the other hand, the exhaust gas purification catalysts of Comparative Examples 1, 3, and 4 were inferior in the results of T50. Further, the exhaust gas purification catalysts of Comparative Examples 1 and 2 were inferior in the results of $\eta$400.

[Table 3]

|  | T50(°C) | $\eta$400(%) |
|---|---|---|
| Example 1 | 245.7 | 98.2 |
| Example 2 | 255.9 | 98.1 |
| Example 3 | 246.9 | 98.1 |
| Comparative Example 1 | 261.6 | 97.9 |
| Comparative Example 2 | 246.6 | 97.8 |
| Comparative Example 3 | 265.4 | 98.3 |
| Comparative Example 4 | 268.0 | 98.5 |

Description of Symbols

1A, 1B, 1C, 1D      Exhaust Gas Purification Catalyst
10                          Substrate
20A, 20B              Catalyst Layer
21                          First Layer
22                          Second Layer

| 23 | Third Layer |
| 100 | Exhaust Gas Purification System |
| 101 | First Exhaust Gas Purification Catalyst |
| 102 | Second Exhaust Gas Purification Catalyst |

**Claims**

1. An exhaust gas purification catalyst comprising:

   a substrate; and
   a catalyst layer provided on the substrate,
   wherein the catalyst layer comprises
   a first layer comprising: a first platinum group element; an oxide containing aluminum element; and barium element; and
   a second layer comprising: a second platinum group element; and a complex oxide containing zirconium element and a rare earth element,
   wherein, in the first layer, a content of aluminum element in terms of oxide and a content of barium element are 15% by mass or more and 3% by mass or more, respectively, based on a mass of the first layer, and
   wherein, in the second layer, a total of a content of zirconium element in terms of oxide and a content of a rare earth element in terms of oxide, a content of aluminum element in terms of oxide, and a content of barium element are 80% by mass or more, less than 15% by mass, and less than 3% by mass, respectively, based on a mass of the second layer.

2. The exhaust gas purification catalyst according to claim 1, wherein the first layer is located between the substrate and the second layer.

3. The exhaust gas purification catalyst according to claim 2, wherein the second layer is an outermost layer of the catalyst layer.

4. The exhaust gas purification catalyst according to any one of claims 1 to 3, wherein the first platinum group element comprises palladium element and the second platinum group element comprises rhodium element.

5. The exhaust gas purification catalyst according to claim 4, wherein the content of barium element in the first layer is 8% by mass or more, based on the mass of the first layer.

6. The exhaust gas purification catalyst according to claim 4 or 5, wherein the catalyst layer further comprises a third layer comprising palladium element.

7. The exhaust gas purification catalyst according to claim 6,

   wherein the third layer comprises a complex oxide containing zirconium element and a rare earth element, and
   wherein, in the third layer, a total of a content of zirconium element in terms of oxide and a content of a rare earth element in terms of oxide, a content of aluminum element in terms of oxide, and a content of barium element are 80% by mass or more, less than 15% by mass, and 8% by mass or less, respectively, based on a mass of the third layer.

8. The exhaust gas purification catalyst according to claim 6 or 7, wherein the third layer is located between the first layer and the second layer.

9. An exhaust gas purification system configured to purify exhaust gas emitted from an internal combustion engine, wherein the exhaust gas purification system comprises:

   an exhaust gas path through which exhaust gas flows;
   a first exhaust gas purification catalyst provided on an upstream side in the exhaust gas path; and
   a second exhaust gas purification catalyst provided on a downstream side in the exhaust gas path, and
   wherein the second exhaust gas purification catalyst is the exhaust gas purification catalyst according to any one of claims 1 to 8.

[FIG. 1]

[FIG. 2]

[FIG. 3]

[FIG. 4]

[FIG. 5]

[FIG. 6]

[FIG. 7]

[FIG. 8]

## INTERNATIONAL SEARCH REPORT

| International application No. |
|---|
| **PCT/JP2022/001429** |

**A. CLASSIFICATION OF SUBJECT MATTER**

*B01J 23/63*(2006.01)i; *B01D 53/94*(2006.01)i; *B01J 35/04*(2006.01)i; *F01N 3/10*(2006.01)i; *F01N 3/28*(2006.01)i
FI:    B01J23/63 A ZAB; B01J35/04 301L; B01D53/94 222; B01D53/94 245; B01D53/94 280; F01N3/10 A; F01N3/28 301P;
F01N3/28 301G

According to International Patent Classification (IPC) or to both national classification and IPC

**B. FIELDS SEARCHED**

Minimum documentation searched (classification system followed by classification symbols)
B01J21/00-38/74; B01D53/86-53/90,53/94-53/96; F01N3/10; F01N3/28

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2012/0180464 A1 (BASF CORPORATION) 19 July 2012 (2012-07-19) claims, paragraph [0002], examples 14B, 19, 23, 24, 26, fig. 1 | 1-7 |
| Y | | 9 |
| A | | 8 |
| Y | JP 2018-527164 A (BASF CORPORATION) 20 September 2018 (2018-09-20) claim 1, paragraph [0001], examples 13, 14, fig. 8 | 9 |
| A | JP 2002-11350 A (DAIHATSU MOTOR CO LTD) 15 January 2002 (2002-01-15) table 1, example 3 | 1-9 |
| A | WO 2017/154685 A1 (CATALER CORP) 14 September 2017 (2017-09-14) claims 1, 7, paragraphs [0110]-[0116], example 3, table 3, fig. 1 | 1-9 |
| A | WO 2017/213105 A1 (CATALER CORP) 14 December 2017 (2017-12-14) claim 1, examples 1-8, fig. 2 | 1-9 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/001429** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 3-38251 A (MAZDA MOTOR CORP) 19 February 1991 (1991-02-19)<br>examples, fig. 3-4 | 1-9 |

Form PCT/ISA/210 (second sheet) (January 2015)

## INTERNATIONAL SEARCH REPORT
### Information on patent family members

| International application No. |
| --- |
| **PCT/JP2022/001429** |

| Patent document cited in search report | | | Publication date (day/month/year) | Patent family member(s) | | | Publication date (day/month/year) |
| --- | --- | --- | --- | --- | --- | --- | --- |
| US | 2012/0180464 | A1 | 19 July 2012 | WO | 2012/099868 | A2 | |
| | | | | EP | 2665556 | A2 | |
| JP | 2018-527164 | A | 20 September 2018 | WO | 2016/210221 | A1 | |
| | | | | claim 1, p. 1, lines 1-6, examples 13, 14, fig. 8 | | | |
| | | | | US | 2018/0178198 | A1 | |
| | | | | EP | 3314101 | A1 | |
| | | | | KR | 10-2018-0011852 | A | |
| | | | | CN | 107923288 | A | |
| JP | 2002-11350 | A | 15 January 2002 | US | 6808687 | B1 | |
| | | | | table 1, example 3 | | | |
| WO | 2017/154685 | A1 | 14 September 2017 | US | 2019/0151829 | A1 | |
| | | | | claims 1, 7, paragraphs [0194]-[0204], example 3 ,table 3, fig. 1 | | | |
| | | | | EP | 3427823 | A1 | |
| | | | | CN | 108698023 | A | |
| WO | 2017/213105 | A1 | 14 December 2017 | US | 2019/0136730 | A1 | |
| | | | | claim 1, examples 1-8, fig. 2 | | | |
| | | | | EP | 3466536 | A1 | |
| | | | | CN | 109310992 | A | |
| JP | 3-38251 | A | 19 February 1991 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008012410 A